# EUROPÄISCHE PATENTSCHRIFT

(11) **EP 1 607 275 B1**
(45) Veröffentlichungstag und Bekanntmachung des Hinweises auf die Patenterteilung: **05.05.2010**
(21) Anmeldenummer: 05012424.7
(22) Anmeldetag: 09.06.2005
(51) Int. Cl.: B60R 21/16

(54) **Fahrerseitige Insassen-Rückhalteeinrichtung**
Driver-side occupant restraint device
Dispositif de retenue côté conducteur

(30) Priorität: 15.06.2004 DE 202004009451 U
(43) Veröffentlichungstag der Anmeldung: 21.12.2005
(73) Patentinhaber: TRW Automotive Safety Systems GmbH, 63743 Aschaffenburg (DE)
(72) Erfinder: Schneider, Michael, Dr., 63834 Sulzbach (DE); Gehlert, Christian, 63768 Hösbach (DE)
(74) Vertreter: Mehnert, Bernhard

(56) Entgegenhaltungen:
- WO-A-93/16902
- DE-U1- 29 702 441

## Beschreibung

Die Erfindung betrifft eine fahrerseitige Insassen-Rückhalteeinrichtung mit einem aufblasbaren Gassack, der bei Aktivierung aus dem Lenkrad des Fahrzeugs austritt, wobei der Gassack vom Lenkrad des Fahrzeugs in Richtung der Lenkraddrehung entkoppelt ist und im aufgeblasenen Zustand eine bezüglich der Lenkradachse unsymmetrische Form aufweist, wobei der Gassack im aufgeblasenen Zustand eine Ausbuchtung aufweist.

Eine solche Insassen-Rückhalteeinrichtung ist aus der DE 297 02 441 U bekannt. Gassäcke, die vom Lenkrad entkoppelt sind, bieten grundsätzlich eine größere Gestaltungsfreiheit bezüglich Größe und Form als Standardgassäcke, die an der Lenkraddrehung teilnehmen und in der Regel rotationssymmetrisch geformt sind, damit sie in jeder Lenkradstellung das gleiche Entfaltungsverhalten aufweisen. Es ist aber zu beachten, daß das Füllvermögen von fahrerseitigen Gasgeneratoren begrenzt ist.

Zum Schutz des Fahrers vor einem Kontakt mit der A-Säule des Fahrzeugs werden separate Seitengassäcke, die sich aus dem Dachbereich des Fahrzeugs nach unten entfalten (sogenannte "Curtain Bags"), oder spezielle Gassäcke, die sich aus der A-Säule heraus entfalten, eingesetzt. Curtain Bags gehören aber nicht unbedingt zur Standardausstattung eines Fahrzeugs, oder sie können bei bestimmten Fahrzeugtypen, insbesondere bei Cabrios, gar nicht eingebaut werden. Gerade bei Cabrios wäre aber aufgrund der sehr schräg verlaufenden A-Säule und Windschutzscheibe ein entsprechender Schutz für den Fahrer wünschenswert. Gassäcke, die in die A-Säule integriert sind, stellen aufgrund der schwierigen Unterbringung im Bauraum der A-Säule und der hohen Kosten keine hinreichend zufriedenstellende Lösung dar.

Aufgabe der Erfindung ist es daher, eine Schutzmaßnahme für den Fahrer vor einem Aufprall auf die A-Säule bereitzustellen, die kostengünstig und unabhängig vom Fahrzeugtyp realisierbar ist.

Die Aufgabe wird erfindungsgemäß durch eine Insassen-Rückhalteeinrichtung der eingangs genannten Art gelöst, bei der die Ausbuchtung wenigstens einen Teil der fahrerseitigen A-Säule des Fahrzeugs abdeckt und sich bezüglich der Lenkradachse im wesentlichen innerhalb eines Winkelbereichs von 270° bis 360° (bei "Linkslenkern", d.h. Fahrzeugen, bei denen das Lenkrad auf der linken Fahrzeugseite angeordnet ist) oder innerhalb eines Winkelbereichs von 0° bis 90° (bei "Rechtslenkern") erstreckt. Der Fahrer wird gemäß der Erfindung vor einem Aufprall auf die A-Säule also durch einen aus dem Lenkrad des Fahrzeugs austretenden Gassack geschützt, der inzwischen fast bei jedem Fahrzeugtyp als Standard-Rückhalteeinrichtung vorgesehen ist. Die Entkopplung des Gassacks vom Lenkrad erlaubt eine bezüglich der Lenkradachse nicht rotationssymmetrische Form des Gassacks. Gemäß der Erfindung weist der Gassack eine spezielle Ausbuchtung auf, die im aufgeblasenen Zustand einen gezielten Schutz vor einem Aufprall auf die A-Säule bietet. Die Ausbuchtung kann verschiedene Formen annehmen und ist an das jeweilige Fahrzeug anzupassen. Ansonsten kann der Gassack der erfindungsgemäßen Insassen-Rückhalteeinrichtung wie ein Standardgassack ausgebildet sein, so daß für die Standardlastfälle ein bewährtes Rückhalteverhalten erreicht wird.

Die erfindungsgemäße Rückhalteeinrichtung kann auch vorteilhaft in einer Variante vorgesehen sein, bei der der Gassack an das Lenkrad des Fahrzeugs in Richtung der Lenkraddrehung gekoppelt ist.

Vorteilhafte und zweckmäßige Ausgestaltungen der erfindungsgemäßen Insassen-Rückhalteeinrichtung, insbesondere bezüglich des Gassacks, sind in den Unteransprüchen angegeben.

Weitere Merkmale und Vorteile der Erfindung ergeben sich aus der nachfolgenden Beschreibung einer bevorzugten Ausführungsform der Erfindung und aus den beigefügten Zeichnungen, auf die Bezug genommen wird. In den Zeichnungen zeigen:
- Figur 1 eine Draufsicht auf einen aufgeblasenen Gassack einer erfindungsgemäßen Insassen-Rückhalteeinrichtung; und
- Figur 2 eine perspektivische Ansicht eines Fahrzeuginnenraums mit einem aufgeblasenen Gassack einer erfindungsgemäßen Insassen-Rückhalteeinrichtung.

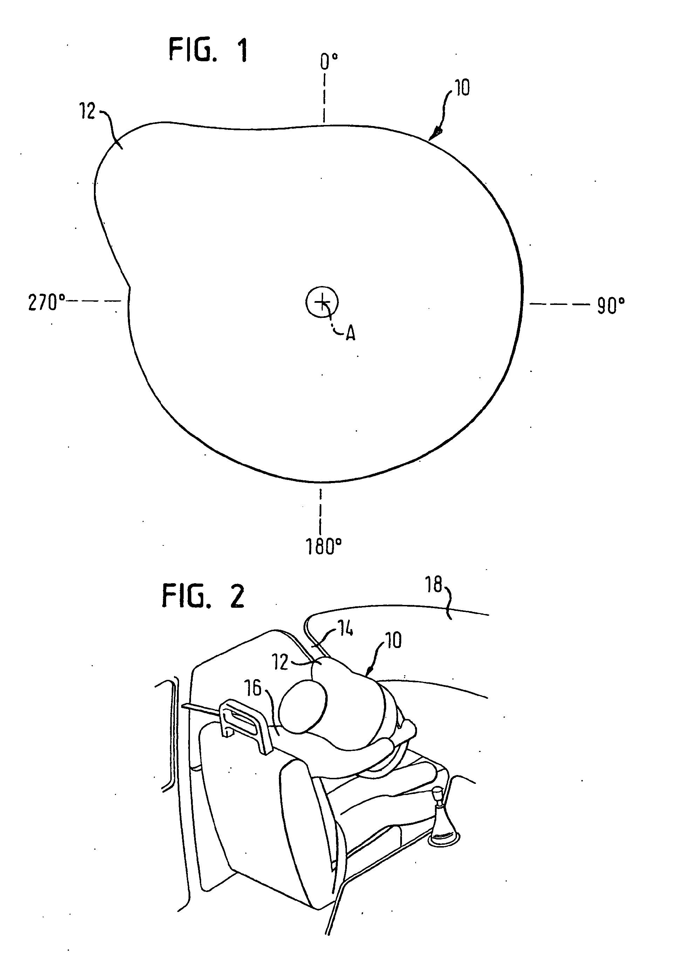

In Figur 1 ist ein Gassack 10 einer erfindungsgemäßen Insassen-Rückhalteeinrichtung im aufgeblasenen Zustand aus Sicht des Fahrers dargestellt. Der Gassack 10 ist vom Lenkrad des Fahrzeugs in Richtung der Lenkraddrehung entkoppelt, d.h. der Gassack 10 entfaltet sich bei einer Aktivierung der Insassen-Rückhalteeinrichtung unabhängig von der aktuellen Lenkradstellung in die in Figur 1 dargestellte Form. Dies setzt ein Lenkrad, bei dem das Gassackmodul der Insassen-Rückhalteeinrichtung in einem feststehenden Mittelteil des Lenkrads untergebracht ist, oder eine vergleichbare Konstruktion voraus.

Die Form des Gassacks 10 entspricht großteils der eines bewährten, bezüglich der Lenkradachse A im wesentlichen rotationssymmetrischen fahrerseitigen Standardgassacks, wie er bei Lenkrädern ohne feststehenden Mittelteil eingesetzt wird. Der Gassack 10 der erfindungsgemäßen Insassen-Rückhalteeinrichtung weist aber eine stark ausgeprägte Ausbuchtung 12 auf, so daß sich bezüglich der Lenkradachse A eine unsymmetrische Gassackform ergibt. Wie in Figur 1 zu erkennen ist, erstreckt sich die Ausbuchtung 12 bezogen auf die Lenkradachse A im wesentlichen in einem Winkelbereich von 270° bis 360°, wenn aus Sicht des Fahrers die "12-Uhr"-Richtung des Lenkrads als 0°-Linie festgelegt wird.

Figur 2 zeigt, daß die Ausbuchtung 12 des Gassacks 10 gezielt zumindest einen Teil der fahrerseitigen A-Säule 14 des Fahrzeugs abdeckt, so daß insbesondere bei einem Schrägaufprall ein Kontakt des Fahrers 16 mit der A-Säule 14 vermieden wird. Die Ausbuchtung 12, die sich bei einer Entfaltung des Gassacks 10 um die A-Säule 14 legt, ist so geformt, daß an der Kontaktstelle zur A-Säule 14 genügend Gassacktiefe zur Verfügung steht, um einen Aufprall auf die A-Säule 14 wirksam abzufangen.

Bei Fahrzeugen, bei denen das Lenkrad auf der rechten Fahrzeugseite angeordnet ist ("Rechtslenker"), erstreckt sich die Ausbuchtung 12 bezogen auf die Lenkradachse A in einem Winkelbereich von 0° bis 90°.

Zusätzlich zu der Ausbuchtung 12 für die Abdeckung der A-Säule 14 kann der Gassack 10 eine weitere Ausbuchtung aufweisen, die einen Teil der Windschutzscheibe 18 des Fahrzeugs abdeckt. Diese weitere Ausbuchtung erstreckt sich bezüglich der Lenkradachse A vorzugsweise im wesentlichen innerhalb eines Winkelbereichs von 0° bis 90° ("Linkslenker") bzw. von 270° bis 360° ("Rechtslenker").

Außerdem kann der Gassack 10 eine Ausweitung zum Schutz des Bauchbereichs des Fahrers 16 aufweisen, die sich bezüglich der Lenkradachse A im wesentlichen innerhalb eines Winkelbereichs von 150° bis 210° erstreckt.

Hergestellt wird der Gassack 10 aus zwei übereinanderliegenden Zuschnitten, die randseitig miteinander vernäht oder auf sonstige Weise miteinander verbunden werden.

## Patentansprüche

1. Fahrerseitige Insassen-Rückhalteeinrichtung mit einem aufblasbaren Gassack (10), der bei Aktivierung aus dem Lenkrad des Fahrzeugs austritt, wobei der Gassack (10) vom Lenkrad des Fahrzeugs in Richtung der Lenkraddrehung entkoppelt ist und im aufgeblasenen Zustand eine bezüglich der Lenkradachse (A) unsymmetrische Form aufweist, wobei der Gassack (10) im aufgeblasenen Zustand eine Ausbuchtung (12) aufweist, **dadurch gekennzeichnet, daß** die Ausbuchtung (12) wenigstens einen Teil der fahrerseitigen A-Säule (14) des Fahrzeugs abdeckt, und sich bezüglich der Lenkradachse (A) im wesentlichen innerhalb eines Winkelbereichs von 270° bis 360° oder innerhalb eines Winkelbereichs von 0° bis 90° erstreckt.

2. Fahrerseitige Insassen-Rückhalteeinrichtung nach Anspruch 1, **dadurch gekennzeichnet, daß** die Ausbuchtung (12) an der A-Säule (14) anliegt.

3. Fahrerseitige Insassen-Rückhalteeinrichtung nach einem der vorhergehenden Ansprüche, **dadurch gekennzeichnet, daß** der Gassack (10) im aufgeblasenen Zustand, abgesehen von der Ausbuchtung (12), eine bezüglich der Lenkradachse (A) im wesentlichen rotationssymmetrische Form aufweist.

4. Fahrerseitige Insassen-Rückhalteeinrichtung nach Anspruch 1 oder 2, **dadurch gekennzeichnet, daß** der Gassack (10) im aufgeblasenen Zustand eine weitere Ausbuchtung aufweist, die einen Teil der Windschutzscheibe (18) des Fahrzeugs abdeckt.

5. Fahrerseitige Insassen-Rückhalteeinrichtung nach Anspruch 4, **dadurch gekennzeichnet, daß** sich die weitere Ausbuchtung bezüglich der Lenkradachse (A) im wesentlichen innerhalb eines Winkelbereichs von 0° bis 90° oder von 270° bis 360° erstreckt.

6. Fahrerseitige Insassen-Rückhalteeinrichtung nach einem der vorhergehenden Ansprüche, **dadurch gekennzeichnet, daß** der Gassack (10) im aufgeblasenen Zustand eine Ausweitung zum Schutz des Bauchbereichs des Fahrers (16) aufweist.

7. Fahrerseitige Insassen-Rückhalteeinrichtung nach Anspruch 6, **dadurch gekennzeichnet, daß** sich die Ausweitung bezüglich der Lenkradachse (A) im wesentlichen innerhalb eines Winkelbereichs von 150° bis 210° erstreckt.

8. Fahrerseitige Insassen-Rückhalteeinrichtung nach einem der vorhergehenden Ansprüche, **dadurch gekennzeichnet, daß** der Gassack (10) aus zwei übereinanderliegenden Zuschnitten gebildet ist.

9. Fahrerseitige Insassen-Rückhalteeinrichtung nach einem der vorhergehenden Ansprüche, mit der Maßgabe, daß der Gassack (10) an das Lenkrad des Fahrzeugs in Richtung der Lenkraddrehung gekoppelt ist.

## Claims

1. Occupant restraint system for driver side with an inflatable gas bag (10) emerging from the steering wheel of a vehicle upon activation whereas the gas bag (10) is uncoupled from the steering wheel of the vehicle in the direction of the steering wheel turning and is, in an inflated condition, comprising an asymmetric shape regarding the steering wheel axis (A), whereas the gas bag (10) comprises a bulge (12) in inflated condition, **characterized in that**,
the bulge (12) covers at least a part of the A-pillar (14) of the driver side and extends substantially within an angle range of 270° to 360° or within an angle range of 0° to 90° regarding the steering wheel axis (A).

2. Occupant restraint system for driver side according to claim 1, **characterized in that**, the bulge (12) rests on the A-pillar (14).

3. Occupant restraint system for driver side according to one of the previous claims, **characterized in that**, the gas bag (10), in inflated condition, comprises, beside the bulge (12), a substantially rotation-symmetric shape.

4. Occupant restraint system for driver side according to claim 1 or 2, **characterized in that**, the gas bag (10), in inflated condition, comprises a further bulge which covers a part of the vehicle-windscreen.

5. Occupant restraint system for driver side according to claim 4, **characterized in that**, the further bulge extends substantially within an angle range of 0° to 90° or within an angle range of 270° to 360° regarding the steering wheel axis (A).

6. Occupant restraint system for driver side according to one of the previous claims, **characterized in that**, the gas bag (10), in inflated condition, comprises an enlargement for protection of the waist of the driver (16).

7. Occupant restraint system for driver side according to claim 6, **characterized in that**, the enlargement extends substantially within an angle range of 150° to 210° regarding the steering wheel axis (A).

8. Occupant restraint system for driver side according to one of the previous claims, **characterized in that**, the gas bag (10) is formed out of two pre-cut parts lying upon another.

9. Occupant restraint system for driver side according to one of the previous claims, **characterized in that**, the gas bag (10) is coupled to the steering wheel of the vehicle in the direction of the steering wheel turning.

## Revendications

1. Dispositif de retenue d'occupant côté conducteur avec un sac de gaz gonflable (10), qui par activation sort du volant du véhicule, où le sac de gaz(10) du volant du véhicule est découplé de la direction du volant et présente en position gonflée une forme asymétrique par rapport à l'axe du volant (A), où en position gonflée le sac de gaz (10) présente une protubérance (12), **caractérisé par le fait que** la protubérance (12) recouvre une partie au moins du pied avant du véhicule côté conducteur, et s'étend essentiellement à l'intérieur d'un secteur angulaire de 270° à 360° ou à l'intérieur d'un secteur angulaire de 0° à 90° par rapport à l'axe du volant (A).

2. Dispositif de retenue d'occupant côté conducteur selon la revendication 1, **caractérisé par le fait que** la protubérance (12) s'appuie sur le pied avant.

3. Dispositif de retenue d'occupant côté conducteur selon l'une des revendications précédentes, **caractérisé par le fait que** le sac de gaz (10) en position gonflée, en dehors de la protubérance (12), présente essentiellement une forme symétrique de révolution par rapport à l'axe du volant (A).

4. Dispositif de retenue d'occupant côté conducteur selon la revendication 1 ou 2, **caractérisé par le fait que** le sac de gaz (10) en position gonflée présente une autre protubérance, qui recouvre une partie du pare-brise (18) du véhicule.

5. Dispositif de retenue d'occupant côté conducteur selon la revendication 4, **caractérisé par le fait que** l'autre protubérance s'étend essentiellement à l'intérieur d'un secteur angulaire de 270° à 360° ou à l'intérieur d'un secteur angulaire de 0° à 90° par rapport à l'axe du volant (A).

6. Dispositif de retenue d'occupant côté conducteur selon l'une des revendications précédentes, **caractérisé par le fait que** le sac de gaz (10) en position gonflée présente une expansion pour la protection de la zone abdominale du conducteur.

7. Dispositif de retenue d'occupant côté conducteur selon la revendication 6, **caractérisé par le fait que** l'expansion s'étend essentiellement à l'intérieur d'un secteur angulaire de 150° à 210° par rapport à l'axe du volant (A).

8. Dispositif de retenue d'occupant côté conducteur selon l'une des revendications précédentes, **caractérisé par le fait que** le sac de gaz (10) est construit de deux pièces découpées superposées.

9. Dispositif de retenue d'occupant côté conducteur selon l'une des revendications précédentes, avec la condition suivante, que le sac de gaz (10) est lié au volant du véhicule au sens de la position de conduite ( à droite ou à gauche).
